# EUROPEAN PATENT SPECIFICATION

(11) **EP 4 187 691 B1**
(45) Date of publication and mention of the grant of the patent: **24.12.2025**
(21) Application number: 22746267.8
(22) Date of filing: 27.01.2022
(51) Int. Cl.: H01M 50/342, H01M 50/184, H01M 50/186, H01M 50/557, H01M 50/191, H01M 50/193

(54) **SECONDARY BATTERY HAVING VENT PORTION FORMED ON INSULATION FILM AND METHOD FOR MANUFACTURING THE SAME**
SEKUNDÄRBATTERIE MIT ENTLÜFTUNGSTEIL AUF EINEM ISOLIERFILM UND HERSTELLUNGSVERFAHREN DAFÜR
BATTERIE SECONDAIRE AYANT UNE PARTIE D'ÉVENT FORMÉE SUR UN FILM ISOLANT ET SON PROCÉDÉ DE FABRICATION

(30) Priority: 27.01.2021 KR 20210011775
(43) Date of publication of application: 31.05.2023
(73) Proprietor: LG Energy Solution, Ltd., Seoul 07335 (KR)
(72) Inventor: LIM, Hun-Hee, Daejeon 34122 (KR); KIM, Sang-Hun, Daejeon 34122 (KR); KANG, Min-Hyeong, Daejeon 34122 (KR); YU, Hyung-Kyun, Daejeon 34122 (KR); HWANG, Soo-Ji, Daejeon 34122 (KR)
(74) Representative: Plasseraud IP
(86) International application number: PCT/KR2022/001526
(87) International publication number: WO 2022/164241

(56) References cited:
- JP-A- 2007 531 643
- JP-A- 2019 192 360
- KR-A- 20160 126 157
- KR-A- 20170 027 150
- KR-A- 20210 004 580
- US-A1- 2014 011 060
- US-A1- 2018 114 964
- US-A1- 2019 326 615

## Description

### TECHNICAL FIELD

The present application claims priority to Korean Patent Application No. 10-2021-0011775 filed on January 27, 2021 in the Republic of Korea.

The present disclosure relates to a secondary battery having a vent portion formed on an insulation film and a method for manufacturing the same.

### BACKGROUND ART

Due to the rapid increase in the use of fossil fuels, the demand for the use of alternative energy or clean energy is increasing, and the most actively studied filed as a part thereof is the field of power generation and power storage using electrochemistry.

Currently, a typical example of electrochemical devices using electrochemical energy includes a secondary battery, and the area of the use of secondary batteries is gradually expanding.

Recently, as technical development and demand for mobile instruments, such as portable computers, cellular phones and cameras, have been increased, secondary batteries as energy sources have been increasingly in demand. Particularly, lithium secondary batteries which show high charge/discharge characteristics and life characteristics and are eco-friendly have been studied intensively, and have been commercialized and used widely.

However, as the application spectrum of lithium secondary batteries has been expanded as mentioned above, there is a need for an increase in energy density. Therefore, such lithium secondary batteries cause an increase in gases generated inside of the secondary batteries due to such increased energy density.

Moreover, when water infiltrates into secondary batteries, side reactions occur, and thus the problems of degradation of the performance of secondary batteries and gas generation are accelerated undesirably.

Under these circumstances, the above-mentioned safety problem has been solved by forming a vent portion in a secondary battery so that the gases generated inside of the secondary battery may be released to the outside. However, when the secondary battery is vented, the life of the secondary battery is reduced significantly. Therefore, there is an imminent need for the solution of the above-mentioned problem.

US 2014/011060 and US 2019/326615 relate to venting portion for gas within a battery cell.

### DISCLOSURE

### Technical Problem

The present disclosure is designed to solve the problems of the related art.

Particularly, the present disclosure is directed to providing a secondary battery having improved safety by structuralizing a gas discharge path efficiently through a simpler method to release gases to the outside efficiently, while minimizing water diffused from the outside, and a method for manufacturing the secondary battery.

### Technical Solution

The invention is defined in the set of claims.

In one aspect of the present disclosure, there is provided a secondary battery which includes an electrode assembly including a positive electrode, a negative electrode and a separator interposed between the positive electrode and the negative electrode, and received in a battery casing together with an electrolyte,
wherein the positive electrode includes a positive electrode tab, and the negative electrode includes a negative electrode tab,
the positive electrode tab is connected electrically to a positive electrode lead, the negative electrode tab is connected electrically to a negative electrode lead, and the positive electrode lead and the negative electrode lead are exposed to the outside through a sealing portion of the battery casing,
each of a positive electrode insulation film and a negative electrode insulation film is attached to a portion where each of the positive electrode lead and the negative electrode lead is in contact with the sealing portion of the battery casing, and
at least one insulation film of the positive electrode insulation film and the negative electrode insulation film has a vent portion surface-treated with a non-adhesive material between the insulation film and the positive electrode lead or the negative electrode lead, at the portion where the positive electrode lead or the negative electrode lead is attached.

Herein, the vent portion may be a coating layer formed by transferring a non-adhesive material from a roll onto the insulation film through roll pressing.

The non-adhesive material may be a material cured after coating a polymer having a melting point of 220°C or higher, or gelled ceramic particles, and particularly, may be a material cured after coating at least one polymer selected from the group consisting of a polyimide-based material, polytetrafluoroethylene and polymethyl pentene, or at least one ceramic particle selected from the group consisting of SiO₂, TiO₂, ZnO, CaO and BaO in a gelled state.

In addition, the vent portion has a planar shape selected from a circular shape, an oval shape and a polygonal shape.

Meanwhile, at least one electrode lead of the positive electrode lead and the negative electrode lead may include a metal substrate and a coating layer formed on the surface of the metal substrate.

**In** another aspect of the present disclosure, there is provided a method for manufacturing the secondary battery, including the steps of:
(a) preparing at least one positive electrode and at least one negative electrode each having a structure including an electrode active material layer formed on a current collector having a tab formed in at least one side thereof;
(b) interposing a separator between the positive electrode and the negative electrode;
(c) transferring a non-adhesive material to at least one of a positive electrode insulation film and a negative electrode insulation film through a roll pressing process by using a roll including the non-adhesive material corresponding to the shape of a vent portion, thereby forming a vent portion; and
(d) connecting the positive electrode lead electrically to the positive electrode tab and connecting the negative electrode lead electrically to the negative electrode tab, and attaching the positive electrode insulation film and the negative electrode insulation film to the positive electrode lead and the negative electrode lead, respectively,
wherein the vent portion is interposed between the positive electrode lead and the portion to which the positive electrode insulation film is attached, between the negative electrode lead and the portion to which the negative electrode insulation film is attached, or both.

Herein, the non-adhesive material may be a material cured after coating a polymer having a melting point of 220°C or higher, or gelled ceramic particles, and particularly, may be a material cured after coating at least one polymer selected from the group consisting of a polyimide-based material, polytetrafluoroethylene and polymethyl pentene, or at least one ceramic particle selected from the group consisting of SiO₂, TiO₂, ZnO, CaO and BaO in a gelled state.

In addition, the vent portion has a planar shape selected from a circular shape, an oval shape and a polygonal shape.

### Advantageous Effects

According to an embodiment of the present disclosure, a gas discharge path may be formed on a lead portion by forming a vent portion on the insulation film attached to an electrode lead, thereby providing an increased effective value.

In addition, the vent film is formed through a simplified method of coating a non-adhesive material on the insulation film adhered with the electrode lead through a roll pressing process, and thus can be formed rapidly and efficiently.

### DESCRIPTION OF DRAWINGS

FIG. 1 is a schematic view illustrating some embodiments of the shape of a vent portion formed on an insulation film according to an embodiment of the present disclosure.
FIG. 2 is a schematic view illustrating the secondary battery according to another embodiment of the present disclosure.
FIG. 3 is a schematic view illustrating the method for forming a vent portion according to still another embodiment of the present disclosure.

### BEST MODE

Hereinafter, preferred embodiments of the present disclosure will be described in detail with reference to the accompanying drawings.

Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise.

It will be understood that the terms "include", "is provided with" or "have" when used in this specification, refer to the presence of any stated features, numbers, steps, elements and/or combinations thereof, but do not preclude the addition of one or more other features, numbers, steps, elements and/or combinations thereof.

In one aspect of the present disclosure, there is provided a secondary battery which includes an electrode assembly including a positive electrode, a negative electrode and a separator interposed between the positive electrode and the negative electrode, and received in a battery casing together with an electrolyte,
wherein the positive electrode includes a positive electrode tab, and the negative electrode includes a negative electrode tab,
the positive electrode tab is connected electrically to a positive electrode lead, the negative electrode tab is connected electrically to a negative electrode lead, and the positive electrode lead and the negative electrode lead are exposed to the outside through a sealing portion of the battery casing,
each of a positive electrode insulation film and a negative electrode insulation film is attached to a portion where each of the positive electrode lead and the negative electrode lead is in contact with the sealing portion of the battery casing, and
at least one insulation film of the positive electrode insulation film and the negative electrode insulation film has a vent portion surface-treated with a non-adhesive material between the insulation film and the positive electrode lead or the negative electrode lead, at the portion where the positive electrode lead or the negative electrode lead is attached.

According to the related art, various methods have been developed to discharge gases generated inside of a secondary battery to the outside, when such gases are generated. For example, there have been attempts to ensure the safety of a secondary battery by discharging the gases generated inside of a secondary battery to the outside through the formation of a notch in a pouch, formation of a separate gas discharge member in a gap with a lead portion, or the like.

However, according to the above-mentioned methods, the secondary battery cannot be used any longer, once it is vented. Therefore, the life of the secondary battery is reduced significantly, or a separate member is required additionally, and thus the methods cannot have an edge in price competitiveness.

On the contrary, according to the present disclosure, a vent portion is formed in an electrode lead portion through a simpler method, and thus it is possible to improve the life of the secondary battery significantly, while ensuring the safety of the secondary battery.

Particularly, the vent portion can be formed through a very simple and inexpensive process.

For example, the vent portion may be formed by using any method known to those skilled in the art with no particular limitation. For example, spin coating, blade coating, spray coating and ink jet printing processes may be used. Particularly, the vent portion may be a coating layer formed by transferring a non-adhesive material from a roll onto an insulation film through roll pressing.

The vent portion may be formed in a very simple manner by forming a coating layer of non-adhesive material on the insulation film adhered with the lead, and attaching the insulation film to the lead in such a manner that the coating layer may be interposed between the lead and the insulation film, in a significantly efficient manner in terms of process and cost.

Herein, the non-adhesive material refers to a material which is not adhered with the positive electrode lead or negative electrode lead subsequently. For example, the non-adhesive material may be a material cured after coating a polymer having a melting point of 220°C or higher, or gelled ceramic particles, and particularly, may be a material cured after coating at least one polymer selected from the group consisting of a polyimide-based material, polytetrafluoroethylene and polymethyl pentene, or at least one ceramic particle selected from the group consisting of SiO₂, TiO₂, ZnO, CaO and BaO in a gelled state.

Herein, the non-adhesive material may be formed with a coating thickness of 30 nm to 1 mm.

When the coating thickness of the non-adhesive material satisfies the above-defined range, there is an advantage in terms of process, and it is possible to prevent a problem in which portions except the non-adhesive material are not sealed. Therefore, it is possible to easily prevent a problem of electrolyte leakage.

Herein, the vent portion may be formed with an area of 10-70%, particularly 20-50%, based on the total area where the positive electrode lead is attached to the positive electrode insulation film, or the negative electrode lead is attached to the negative electrode insulation film.

When the area of the vent portion satisfies the above-defined range, it is possible to prevent a sealability-related problem, such as electrolyte leakage, while ensuring a vent effect.

Meanwhile, the vent portion is not particularly limited in terms of its planar shape, and may have various forms, such as a circular shape, an oval shape and a polygonal shape, with the proviso that it may be formed with a pattern capable of preventing a problem, such as electrolyte leakage, and discharging gases efficiently.

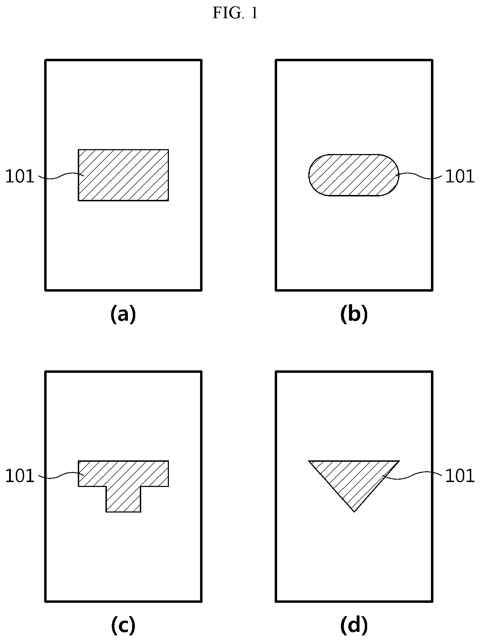

FIG. 1 is a schematic view illustrating some embodiments of the shape of a vent portion 101 on the insulation film 100.

Referring to FIG. 1, FIG. 1(a) illustrates a rectangular vent portion, FIG. 1(b) illustrates an oval vent portion, FIG. 1(c) illustrates an irregularity-like polygonal vent portion, and FIG. 1(d) illustrates a triangular vent portion 101.

However, the shapes as shown in the drawings are for illustrative purposes only, and the scope of the present disclosure is not limited thereto.

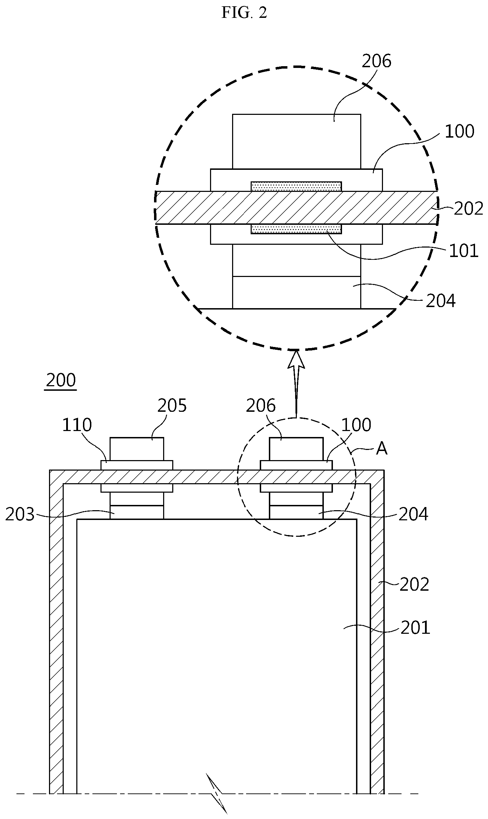

FIG. 2 is a schematic view illustrating the secondary battery 200 according to an embodiment of the present disclosure.

Referring to FIG. 2, an electrode assembly 201 including a positive electrode, a negative electrode and a separator interposed between the positive electrode and the negative electrode is received in a battery casing 202 together with an electrolyte, wherein the positive electrode includes a positive electrode tab 203, the negative electrode includes a negative electrode tab 204, the positive electrode tab 203 is connected electrically to a positive electrode lead 205, the negative electrode tab 204 is connected electrically to a negative electrode lead 206, the positive electrode lead 205 and the negative electrode lead 206 are exposed to the outside through a sealing portion of the battery casing, each of a positive electrode insulation film 110 and a negative electrode insulation film 100 is attached to a portion where each of the positive electrode lead 205 and the negative electrode lead 206 is in contact with the sealing portion of the battery casing 202.

Herein, when the portion where the negative electrode insulation film 100 is attached to the negative electrode lead 206 is enlarged (A) and the structure thereof is reviewed, it can be seen that a vent portion 101 is formed partially at the portion where the negative electrode insulation film 100 is attached to the negative electrode lead 206.

Herein, the vent portion 101 is disposed between the negative electrode insulation film 100 and the negative electrode lead 206 and is not adhered with the negative electrode lead 206, and thus functions as a gas discharge path.

Although it is not shown in the drawing, a vent portion may be formed in the positive electrode insulation film 110, or may be formed in both of the positive electrode insulation film 110 and the negative electrode insulation film 100.

Meanwhile, the vent portion 101 may be formed with an area of 20-90%, particularly 30-80%, based on the area where the negative electrode lead 206 is in contact with the negative electrode insulation film 100.

When the area of the vent portion 101 satisfies the above-defined range, it is possible to ensure a sufficient area for the adhesion of the lead with the insulation film, while ensuring a vent effect, and thus to ensure sealability with ease.

In addition, the shape of the vent portion is the same as described hereinabove.

The positive electrode insulation film 110 and the negative electrode insulation film 100 may be made of any one material selected from electrically insulating thermoplastic, thermosetting and photocurable resins. Particular examples of the material include polyolefin resin, styrene butadiene resin, styrene resin, epoxy resin, urethane resin, acrylic resin, phenolic resin, amide-based resin, acrylate resin and modified resin thereof, but the material is not particularly limited, as long as it can perform the above-described functions.

Reference will be made to the contents known to date about the other detailed description of the insulation film.

Meanwhile, at least one electrode lead of the positive electrode lead 205 and the negative electrode lead 206 may be made of a metal substrate, but may include the metal substrate and a coating layer formed on the surface of the metal substrate.

Herein, the metal substrate may include at least one selected from the group consisting of nickel (Ni), aluminum (Al), copper (Cu) and stainless steel. Particularly, a preferred material for the metal substrate may be different depending on whether the electrode lead is a positive electrode lead or a negative electrode lead. For example, in the case of the positive electrode lead, the metal substrate may include aluminum, nickel or alloy containing at least one of them. In the case of the negative electrode lead, the metal substrate may include copper, nickel or alloy containing at least one of them.

Meanwhile, the coating layer is used to prevent the electrode lead from corrosion caused by a strong acid generated by the reaction between water infiltrating to the secondary battery and an electrolyte, while improving the adhesion between the electrode lead and the insulation film. For example, the coating layer may include a metal or metal oxide, and particularly, may include at least one selected from the group consisting of chrome (Cr), nickel (Ni), iron (Fe), molybdenum (Mo), silicon (Si), titanium (Ti), columbium (Cb), silicon oxide, tin oxide and titanium oxide.

Herein, the coating layer may have a thickness of 100 µm or less, particularly 30-100 µm, more particularly 30-80 µm, and most particularly 30-70 µm.

When the above-defined range is satisfied, it is possible to prevent the positive electrode lead and the negative electrode lead from corrosion caused by the strong acid generated inside of a secondary battery, while preventing an excessive increase in the thickness of the leads, preferably.

In addition, the coating layer may be formed by using a method well known to those skilled in the art with no particular limitation. For example, the coating layer may be formed by electroplating, or the like.

Although the battery casing is not particularly limited, it may be a pouch-type battery casing which allows suitable application of the above-described structure.

The constitution of the positive electrode, negative electrode, separator, positive electrode tab, negative electrode tab, battery casing, electrolyte, or the like, is known to those skilled in the art, and detailed description thereof will be omitted herein.

Meanwhile, in another aspect of the present disclosure, there is provided a method for manufacturing the secondary battery, including the steps of:
(a) preparing at least one positive electrode and at least one negative electrode each having a structure including an electrode active material layer formed on a current collector having a tab formed in at least one side thereof;
(b) interposing a separator between the positive electrode and the negative electrode;
(c) transferring a non-adhesive material to at least one of a positive electrode insulation film and a negative electrode insulation film through a roll pressing process by using a roll including the non-adhesive material corresponding to the shape of a vent portion, thereby forming a vent portion; and
(d) connecting the positive electrode lead electrically to the positive electrode tab and connecting the negative electrode lead electrically to the negative electrode tab, and attaching the positive electrode insulation film and the negative electrode insulation film to the positive electrode lead and the negative electrode lead, respectively,
wherein the vent portion is interposed between the positive electrode lead and the portion to which the positive electrode insulation film is attached, between the negative electrode lead and the portion to which the negative electrode insulation film is attached, or both.

Particularly, according to the present disclosure, the vent portion may be formed by a roll pressing process.

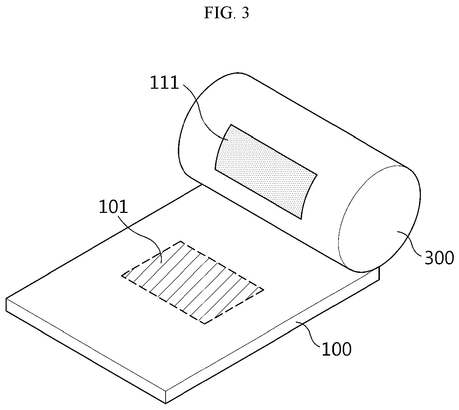

The method is shown schematically in FIG.3.

Referring to FIG. 3, a roll 300 having a non-adhesive material 111 corresponding to the shape of a vent portion 101 formed on the surface thereof is used to carry out pressing so that the non-adhesive material 111 may be transferred to and coated on the surface of the insulation film 100, thereby forming a vent portion 101.

Herein, particular examples of the non-adhesive material 111 are the same as described above. In the drawing, the shape of the vent portion 101 is a rectangular shape. However, the vent portion may have a planar shape selected from a circular shape, an oval shape and a polygonal shape with no particular limitation.

## Claims

1. A secondary battery which comprises an electrode assembly (201) comprising a positive electrode, a negative electrode and a separator interposed between the positive electrode and the negative electrode, and received in a battery casing (202) together with an electrolyte,
wherein the positive electrode comprises a positive electrode tab (203), and the negative electrode comprises a negative electrode tab (204),
the positive electrode tab (203) is connected electrically to a positive electrode lead (205), the negative electrode tab (204) is connected electrically to a negative electrode lead (206), and the positive electrode lead (205) and the negative electrode lead (206) are exposed to the outside through a sealing portion of the battery casing,
each of a positive electrode insulation film (110) and a negative electrode insulation film (100) is attached to a portion where each of the positive electrode lead (205) and the negative electrode lead (206) is in contact with the sealing portion of the battery casing,
the secondary battery being **characterized in that**:
at least one insulation film of the positive electrode insulation film (110) and the negative electrode insulation film (100) has a vent portion (101) surface-treated with a non-adhesive material between the insulation film and the positive electrode lead (205) or the negative electrode lead (206), at the portion where the positive electrode lead (205) or the negative electrode lead (206) is attached.

2. The secondary battery according to claim 1, wherein the vent portion (101) is a coated layer of a non-adhesive material on the insulation film through roll pressing.

3. The secondary battery according to claim 1, wherein the non-adhesive material is a cured material of at least one polymer selected from the group consisting of a polyimide-based material, polytetrafluoroethylene and polymethyl pentene, or at least one ceramic particle selected from the group consisting of SiO₂, TiO₂, ZnO, CaO and BaO in a gelled state.

4. The secondary battery according to claim 1, wherein the vent portion (101) has a planar shape selected from a circular shape, an oval shape and a polygonal shape.

5. The secondary battery according to claim 1, wherein at least one electrode lead of the positive electrode lead (205) and the negative electrode lead (206) comprises a metal substrate and a coating layer formed on the surface of the metal substrate.

6. A method for manufacturing the secondary battery as defined in claim 1, comprising the steps of:
(a) preparing at least one positive electrode and at least one negative electrode each having a structure comprising an electrode active material layer formed on a current collector having a tab formed in at least one side thereof;
(b) interposing a separator between the positive electrode and the negative electrode;
(c) transferring a non-adhesive material to at least one of a positive electrode insulation film (110) and a negative electrode insulation film (100) through a roll pressing process by using a roll including the non-adhesive material corresponding to the shape of a vent portion (101), thereby forming a vent portion (101); and
(d) connecting the positive electrode lead (205) electrically to the positive electrode tab (203) and connecting the negative electrode lead (206) electrically to the negative electrode tab (204), and attaching the positive electrode insulation film (110) and the negative electrode insulation film (100) to the positive electrode lead (205) and the negative electrode lead (206), respectively,
wherein the vent portion (101) is interposed between the positive electrode lead (205) and the portion to which the positive electrode insulation film (110) is attached, between the negative electrode lead (206) and the portion to which the negative electrode insulation film (100) is attached, or both.

7. The method for manufacturing the secondary battery according to claim 6, wherein the non-adhesive material is a material cured after coating at least one polymer selected from the group consisting of a polyimide-based material, polytetrafluoroethylene and polymethyl pentene, or at least one ceramic particle selected from the group consisting of SiO₂, TiO₂, ZnO, CaO and BaO in a gelled state.

8. The method for manufacturing the secondary battery according to claim 6, wherein the vent portion (101) has a planar shape selected from a circular shape, an oval shape and a polygonal shape.

## Patentansprüche

1. Sekundärbatterie, welche eine Elektrodenanordnung (201) umfasst, welche eine positive Elektrode, eine negative Elektrode und einen zwischen der positiven Elektrode und der negativen Elektrode eingefügten Separator umfasst, und in einem Batteriegehäuse (202) zusammen mit einem Elektrolyten aufgenommen ist, wobei die positive Elektrode einen positiven Elektrodenstreifen (203) umfasst und die negative Elektrode einen negativen Elektrodenstreifen (204) umfasst, der positive Elektrodenstreifen (203) elektrisch mit einer positiven Elektrodenleitung (205) verbunden ist, der negative Elektrodenstreifen (204) elektrisch mit einer negativen Elektrodenleitung (206) verbunden ist und die positive Elektrodenleitung (205) und die negative Elektrodenleitung (206) zu der Außenseite durch einen Dichtungsabschnitt des Batteriegehäuses freigelegt sind, jeder aus einem positiven Elektroden-Isolierungsfilm (110) und einem negativen Elektroden-Isolierungsfilm (100) an einem Abschnitt angebracht ist, wo jede aus der positiven Elektrodenleitung (205) und der negativen Elektrodenleitung (206) in Kontakt mit dem Dichtungsabschnitt des Batteriegehäuses ist, wobei die Sekundärbatterie **dadurch gekennzeichnet ist, dass** wenigstens ein Isolierungsfilm aus dem positiven Elektroden-Isolierungsfilm (110) und dem negativen Elektroden-Isolierungsfilm (100) einen Lüftungsabschnitt (101) aufweist, welcher mit einem nicht-haftenden Material oberflächenbehandelt ist, zwischen dem Isolierungsfilm und der positiven Elektrodenleitung (205) oder der negativen Elektrodenleitung (206), an dem Abschnitt, an welchem die positive Elektrodenleitung (205) oder die negative Elektrodenleitung (206) angebracht ist.

2. Sekundärbatterie nach Anspruch 1, wobei der Lüftungsabschnitt (101) eine beschichtete Lage aus einem nicht-haftenden Material an dem Isolationsfilm durch Walzpressen ist.

3. Sekundärbatterie nach Anspruch 1, wobei das nicht-haftende Material ein gehärtetes Material aus wenigstens einem Polymer, ausgewählt aus der Gruppe, bestehend aus einem Polyimid-basierten Material, Polytetrafluorethylen und Polymethylpenten oder wenigstens ein Keramikpartikel ist, ausgewählt aus der Gruppe, bestehend aus SiO₂, TiO₂, ZnO, CaO und BaO in einem gelierten Zustand.

4. Sekundärbatterie nach Anspruch 1, wobei der Lüftungsabschnitt (101) eine planare Form aufweist, ausgewählt aus einer kreisförmigen Form, einer ovalen Form und einer polygonalen Form.

5. Sekundärbatterie nach Anspruch 1, wobei wenigstens eine Elektrodenleitung aus der positiven Elektrodenleitung (205) und der negativen Elektrodenleitung (206) ein Metallsubstrat und eine Beschichtungslage umfasst, welche an der Oberfläche des Metallsubstrats gebildet ist.

6. Verfahren zum Herstellen der Sekundärbatterie wie in Anspruch 1 definiert, umfassend die Schritte:
(a) Vorbereiten wenigstens einer positiven Elektrode und wenigstens einer negativen Elektrode, welche jeweils eine Struktur aufweisen, welche eine Schicht von aktiven Elektrodenmaterial umfasst, welche an einem Stromsammler mit einem Streifen gebildet ist, welcher in wenigstens einer Seite davon gebildet ist;
(b) Einfügen eines Separators zwischen der positiven Elektrode und der negativen Elektrode;
(c) Übertragen eines nicht-haftenden Materials auf wenigstens eines aus einem positiven Elektroden-Isolierungsfilm (110) und einem negativen Elektroden-Isolierungsfilm (100) durch einen Walzpress-Prozess durch Verwenden einer Walze, welche das nicht-haftende Material umfasst, welches der Form eines Lüftungsabschnitts (101) entspricht, wodurch ein Lüftungsabschnitt (101) gebildet wird; und
(d) elektrisches Verbinden der positiven Elektrodenleitung (205) mit dem positiven Elektrodenstreifen (203) und elektrisches Verbinden der negativen Elektrodenleitung (206) mit dem negativen Elektrodenstreifen (204) und Anbringen des positiven Elektroden-Isolierungsfilms (110) und des negativen Elektroden-Isolierungsfilms (100) an der positiven Elektrodenleitung (205) bzw. der negativen Elektrodenleitung (206),
wobei der Lüftungsabschnitt (101) zwischen der positiven Elektrodenleitung (205) und dem Abschnitt eingefügt wird, an welchem der positive Elektroden-Isolierungsfilm (110) angebracht wird, zwischen der negativen Elektrodenleitung (206) und dem Abschnitt, an welchem der negative Elektroden-Isolierungsfilm (100) angebracht wird, oder beidem.

7. Verfahren zum Herstellen der Sekundärbatterie nach Anspruch 6, wobei das nicht-haftende Material ein Material ist, welches gehärtet wird, nachdem wenigstens ein Polymer beschichtet wird, ausgewählt aus der Gruppe, bestehend aus einem Polyimid-basierten Material, Polytetrafluorethylen und Polymethylpenten oder wenigstens ein Keramikpartikel, ausgewählt aus der Gruppe, bestehend aus SiO₂, TiO₂, ZnO, CaO und BaO in einem gelierten Zustand.

8. Verfahren zum Herstellen der Sekundärbatterie nach Anspruch 6, wobei der Lüftungsabschnitt (101) eine planare Form aufweist, ausgewählt aus einer kreisförmigen Form, einer ovalen Form und einer polygonalen Form.

## Revendications

1. Batterie secondaire qui comprend un ensemble électrode (201) comprenant une électrode positive, une électrode négative et un séparateur interposé entre l'électrode positive et l'électrode négative, et reçu dans un boîtier de batterie (202) conjointement avec un électrolyte,
dans laquelle l'électrode positive comprend une languette (203) d'électrode positive, et l'électrode négative comprend une languette (204) d'électrode négative,
la languette (203) d'électrode positive est connectée électriquement à un fil (205) d'électrode positive, la languette (204) d'électrode négative est connectée électriquement à un fil (206) d'électrode négative, et le fil (205) d'électrode positive et le fil (206) d'électrode négative sont exposés à l'extérieur par l'intermédiaire d'une partie d'étanchéité du boîtier de batterie,
chacun d'un film isolant (110) d'électrode positive et d'un film isolant (100) d'électrode négative est fixé à une partie où chacun du fil (205) d'électrode positive et du fil (206) d'électrode négative est en contact avec la partie d'étanchéité du boîtier de batterie,
la batterie secondaire étant **caractérisée en ce que** :
au moins un film isolant parmi le film isolant (110) d'électrode positive et le film isolant (100) d'électrode négative présente une partie d'évent (101) traitée en surface avec un matériau non adhésif entre le film isolant et le fil (205) d'électrode positive ou le fil (206) d'électrode négative, au niveau de la partie où le fil (205) d'électrode positive ou le fil (206) d'électrode négative est fixé.

2. Batterie secondaire selon la revendication 1, dans laquelle la partie d'évent (101) est une couche revêtue d'un matériau non adhésif sur le film isolant par pressage au rouleau.

3. Batterie secondaire selon la revendication 1, dans laquelle le matériau non adhésif est un matériau durci d'au moins un polymère sélectionné dans le groupe consistant en un matériau à base de polyimide, du polytétrafluoroéthylène et du polyméthylpentène, ou au moins une particule céramique sélectionnée dans le groupe consistant en SiO₂, TiO₂, ZnO, CaO et BaO à l'état gélifié.

4. Batterie secondaire selon la revendication 1, dans laquelle la partie d'évent (101) présente une forme plane sélectionnée parmi une forme circulaire, une forme ovale et une forme polygonale.

5. Batterie secondaire selon la revendication 1, dans laquelle au moins un fil d'électrode parmi le fil (205) d'électrode positive et le fil (206) d'électrode négative comprend un substrat métallique et une couche de revêtement formée sur la surface du substrat métallique.

6. Procédé de fabrication de la batterie secondaire selon la revendication 1, comprenant les étapes suivantes :
(a) la préparation d'au moins une électrode positive et d'au moins une électrode négative présentant chacune une structure comprenant une couche de matériau actif d'électrode formée sur un collecteur de courant présentant une languette formée sur au moins un côté de celui-ci ;
(b) l'interposition d'un séparateur entre l'électrode positive et l'électrode négative ;
(c) le transfert d'un matériau non adhésif sur au moins l'un parmi un film isolant (110) d'électrode positive et un film isolant (100) d'électrode négative par un processus de pressage au rouleau en utilisant un rouleau incluant le matériau non adhésif correspondant à la forme d'une partie d'évent (101), formant ainsi une partie d'évent (101) ; et
(d) la connexion électrique du fil (205) d'électrode positive à la languette (203) d'électrode positive et la connexion électrique du fil (206) d'électrode négative à la languette (204) d'électrode négative, et la fixation du film isolant (110) d'électrode positive et du film isolant (100) d'électrode négative au fil (205) d'électrode positive et au fil (206) d'électrode négative, respectivement,
dans lequel la partie d'évent (101) est interposée entre le fil (205) d'électrode positive et la partie à laquelle le film isolant (110) d'électrode positive est fixé, entre le fil (206) d'électrode négative et la partie à laquelle le film isolant (100) d'électrode négative est fixé, ou les deux.

7. Procédé de fabrication de la batterie secondaire selon la revendication 6, dans lequel le matériau non adhésif est un matériau durci après revêtement d'au moins un polymère sélectionné dans le groupe consistant en un matériau à base de polyimide, du polytétrafluoroéthylène et du polyméthylpentène, ou au moins une particule céramique sélectionnée dans le groupe consistant en SiO₂, TiO₂, ZnO, CaO et BaO à l'état gélifié.

8. Procédé de fabrication de la batterie secondaire selon la revendication 6, dans lequel la partie d'évent (101) présente une forme plane sélectionnée parmi une forme circulaire, une forme ovale et une forme polygonale.
